(19) Europäisches Patentamt
European Patent Office
Office européen des brevets

(11) Publication number: 0 004 192
B1

(12) **EUROPEAN PATENT SPECIFICATION**

(45) Date of publication of patent specification: 18.11.81

(51) Int. Cl.³: C 22 C 19/03, F 17 C 11/00

(21) Application number: 79300374.0

(22) Date of filing: 12.03.79

(54) **Mischmetal-nickel-aluminium alloys.**

(30) Priority: 14.03.78 US 886555

(43) Date of publication of application: 19.09.79 Bulletin 79/19

(45) Publication of the grant of the European patent: 18.11.81 Bulletin 81/46

(84) Designated Contracting States: BE DE FR GB IT SE

(56) References cited:
DE - A - 2 003 749
DE - B - 2 531 406
US - A - 3 825 418
US - A - 3 883 346

(73) Proprietor: MPD Technology Limited
Thames House Millbank
London SW1P 4QF (GB)

(72) Inventor: Sandrock, Gary, Dale
113 Kraft Place
Ringwood Passaic County New Jersey (US)

(74) Representative: Lockwood, Barbara Ann et al,
Thames House (Fifth Floor) Millbank
London SW1P 4QF (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).



Courier Press, Leamington Spa, England.

# Mischmetal-nickel-aluminium alloys

The present invention relates to mischmetal-nickel-aluminium alloys for the storage of hydrogen.

A number of metals, alloys and intermetallic compounds are known which will store hydrogen in chemical combination and which will release the chemically combined hydrogen under appropriate conditions of temperature and pressure. It is desirable to be able to store and release hydrogen over a range of moderate temperatures, for example, 0—95°C and at a pressure range of from greater than atmospheric to sub-atmospheric pressure. Under these conditions, the hydrogen can then be recovered using water as a heat exchange medium and at pressures which are in common use in industry. At the same time, however this low temperature, moderate pressure delivery of hydrogen must be obtainable at a reasonable cost and without the need of critical hydrogen purification steps to avoid poisoning the storage medium. At the present time there is no hydride storage system which satisfactorily meets all of these requirements. In general they are very expensive, and although some systems, for example $LaNi_5$, have desirable adsorption and desorption characteristics, others such as La-Ni-Al requires much higher temperatures to provide for the desorption of hydrogen to be carried out at desirable pressures.

The present invention is based on the discovery of a novel hydride-forming alloy which has a reasonable initial cost, and which provides a hydride-storage system from which hydrogen can be delivered at moderate pressures and temperatures.

According to the present invention an alloy for use in the storage of hydrogen has the composition represented by the formula

$$MM\ Ni_{(y-[x+z])}Al_x\ Fe_z$$

in which MM is mischmetal, y is a number of from 4.5 to 5.5, x is a number from 0.1 to 1.5, z is a number from 0 to 0.3, and [x + z] has a maximum value of 1.5. The mischmetal is regarded as having an equivalent atomic weight of about 140.

Advantageously, "x" has a value in the range of 0.3 to 0.8, "y" is substantially 5 and "z" is substantially 0. It will be seen that iron can be present in the alloy in an amount of up to 0.3 atom in substitution of part of the aluminium on an atom-for-atom basis provided that at least 0.1 atom of aluminium is present. The formula is presented for the purpose of defining compositional limitations only and is not intended to imply any quantitative equivalency in effect between aluminium and iron. Alloys of the present invention, when in the fully hydrided condition, have hydrogen dissociation pressures at 25°C of 0.01 to 15 atmospheres absolute.

The alloys of the present invention are made by melting together commercially pure nickel, mischmetal and aluminium and optionally iron. When melting the alloy, it is desirable to minimize contamination by elements such as oxygen, carbon and sulphur. Other than these elements, the alloys of the present invention can tolerate up to about 0.5% by weight of impurities normally associated with the three essential ingredients. After the alloy is completely melted and homogenized, for example by heating to about 1425°C, it is then cast into any convenient shape. The casting is then broken up into particles of convenient mesh size. In use, the particles, for example, 1 cm average dimension, are put into a container and the residual air is evacuated. The particles are then exposed to hydrogen to form the hydride and, when required, the hydride is disassociated to recover the hydrogen. The charge-discharge cycle results in a breakdown of particle size of the alloy. Because of this particle breakdown, it is advantageous to employ the alloy of the present invention in containment means as disclosed in U.S. patents 4 133 426, 4 134 490, 4 134 491 and 4 135 621.

Alloys of the present invention have been prepared with a mischmetal which contains 48 to 50% cerium, 32 to 34% lanthanum, 13 to 14% neodymium, 4 to 5% praseodymium and 1.5% other rare earths. Other grades of mischmetal may of course be used. These normally contain lanthanum as a minor constituent of the commercial mixture, but the mischmetal costs only a minor fraction of the cost of lanthanum.

It has been found to be advantageous to anneal the as-cast alloy of the present invention. This improves the alloy properties relative to hydriding and to subsequent dissociation of the hydride. Annealing can be carried out at temperatures greater than 1050°C and below the alloy melting point for 1 to 24 hours. Annealing generally results in a flatter plateau in the pressure/composition charge-discharge curves.

An example will now be given.

## Example

Quantities of mischmetal, nickel and aluminium were melted together in an induction furnace at a finish temperature of 1425°C to provide the cast alloys set forth in Table 1.

TABLE 1

| Alloy No. | Mischmetal Atom | Mischmetal % by wt. | Nickel Atom | Nickel % by wt. | Aluminium Atom | Aluminium % by wt. |
|---|---|---|---|---|---|---|
| 1 | 1 | 33.5 | 4.5 | 63.25 | 0.5 | 3.2 |
| 1 | 1 | 34.0 | 4.3 | 61.4 | 0.7 | 4.6 |
| 3 | 1 | 34.6 | 4.1 | 59.4 | 0.9 | 6.0 |

The as-cast alloys of Table 1, in particulate form, were hydrided by exposing them to hydrogen at a pressure of 68 atmospheres. This pressure of hydrogen was used for testing purposes but hydrogen charging can be carried out at lower pressures. The hydrogen was then desorbed from the alloys at 25°C. Atomic hydrogen to metal ratios and associated dissociation pressures obtained during desorptions are shown in Table 2.

TABLE 2

| Alloy No. | H/Me* | Dissociation Pressure (Atm $H_2$ absol.) |
|---|---|---|
| 1 | 0.2 | 2.3 |
| 2 | 0.2 | 0.44 |
| 3 | 0.2 | 0.075 |
| 1 | 0.4 | 3.2 |
| 2 | 0.4 | 0.71 |
| 3 | 0.4 | 0.15 |
| 1 | 0.6 | 4.3 |
| 2 | 0.6 | 1.33 |
| 3 | 0.6 | 0.60 |

* This ratio is unity when 6 atom weights of hydrogen are associated with 1 mole weight of alloy.

By way of comparison a mischmetal-nickel alloy containing no aluminium exhibited dissociation pressures in the range of 25 to 30 atmospheres with hydrogen to metal ratios in the range of 0.2 to 0.6.

Samples of Alloy No. 1 were annealed at 1125°C for 4 hours. The annealed samples were hydrogenated and atomic hydrogen to metal ratios and associated dissociation pressures were measured during subsequent hydrogen desorption. The results are shown in Table 3. It will be seen that the annealing treatment causes flattening of the desorption plateau.

TABLE 3

| H/Me | Dissoc. Press Atm $H_2$ (absol) |
|---|---|
| 0.2 | 3.4 |
| 0.4 | 3.7 |
| 0.6 | 3.9 |

After annealing treatment, alloy No. 1 was also characterised by low hysterisis in the charge-discharge curves resulting from plotting hydrogen pressure versus metal to hydrogen ratio measured at 25°C.

The hydrogen discharge plateau pressure at various temperatures for alloy No. 1 in the annealed condition is indicated by the data shown in Table 4.

TABLE 4

| Temp. °C | Hydrogen Dissociation Pressure Atm (Abs) | |
|---|---|---|
| | H /Me = 0.2 | H /Me = 0.6 |
| 0 | 1.2 | 1.4 |
| 25 | 3.4 | 3.9 |
| 60 | 11.0 | 12.5 |
| 99 | 34.0 | 38.0 |

The data shown in Table 4 shows that the alloys of the present invention can exhibit wide ranges of hydrogen discharge pressures over a range of temperatures readily obtainable with water-based heat exchange media. In contrast, superficially similar alloys containing lanthanum in place of mischmetal must be heated to much higher temperatures during hydrogen discharge in order to approach of useful pressures evidenced by the data in Table 4.

As shown in Table 4, alloy No. 1 is particularly useful in that even at 0°C the plateau pressure for hydrogen dissociation is above atmospheric thereby easing the design of vehicular hydrogen fuel systems.

**Claims**

1. An alloy for use in the storage of hydrogen having the composition represented by the formula

$$MM\ Ni_{(y-[x+z])}Al_x\ Fe_z$$

in which MM is mischmetal, y is a number of from 4.5 to 5.5, x is a number from 0.1 to 1.5, z is a number from 0 to 0.3 and [x + z] has a maximum value of 1.5.

2. An alloy as claimed in claim 1 in which y is 5, x is from 0.3 to 0.8 and z is substantially 0.
3. An alloy as claimed in claim 1 or claim 2 in which y is 5, x is 0.5 and z is 0.
4. An alloy as claimed in any preceding claim in the annealed condition.

**Revendications**

1. Alliage utile pour emmagasiner de l'hydrogène, présentant la composition représentée par la formule:

$$MM\ Ni_{(y-[x+z])}Al_x\ Fe_z$$

dans laquelle MM est un mischmétal, y est un nombre d'environ 4,5 à 5,5, x est un nombre d'environ 0,1 à 1,5, z est un nombre d'environ 0 à 0,3 et [x + z] a une valeur maximum de 1,5.

2. Alliage selon la revendication 1, dans lequel y est égal à 5, x est compris entre 0,3 et 0,8 et z est sensiblement égal à 0.

3. Alliage selon la revendication 1 ou la revendication 2, dans lequel y est égal à 5, x est égal à 0,5 et z est égal à 0.

4. Alliage selon l'une des revendications précédentes, à l'état recuit.

**Patentansprüche**

1. Legierung zur Verwendung in der Wasserstoffaufbewahrung mit durch folgende Formel dargestellter Zusammensetzung

$$MM\ Ni_{(y-[x+z])}Al_x\ Fe_z$$

wobei MM Mischmetall ist, y eine Zahl zwischen 4,5 und 5,5, x eine Zahl zwischen 0,1 und 1,5, z eine Zahl zwischen 0 und 0,3 und [x + z] einen Höchstwert von 1,5 hat.

2. Legierung nach Patentanspruch 1, bei der y gleich 5 ist, x zwischen 0,3 und 0,8 liegt und z im wesentlichen gleich null ist.

3. Legierung nach Patentanspruch 1 oder 2, bei der y gleich 5 ist, x gleich 0,5 und z gleich null.

4. Legierung nach einem der vorhergehenden Patentansprüche, in vergütetem Zustand.